# EUROPEAN PATENT SPECIFICATION

(11) **EP 1 901 936 B1**
(45) Date of publication and mention of the grant of the patent: **21.03.2018**
(21) Application number: 06747926.1
(22) Date of filing: 19.06.2006
(51) Int. Cl.: B60K 17/10, A01D 75/18, B60K 28/10

(54) **IMPLEMENT CARRIER**
GERÄTETRÄGER
SUPPORT D'APPAREIL

(30) Priority: 08.07.2005 SE 0501599
(43) Date of publication of application: 26.03.2008
(73) Proprietor: GGP Sweden AB, 573 28 Tranås (SE)
(72) Inventor: JOHANSSON, Sören, S-573 43 Tranås (SE); DUFMATS, Rolf, S-573 34 Tranås (SE)
(74) Representative: Mittler, Andrea
(86) International application number: PCT/SE2006/000734
(87) International publication number: WO 2007/008134

(56) References cited:
- EP-B1- 1 172 245
- JP-A- S6 299 217
- JP-A- 06 042 635
- JP-A- 10 138 888
- JP-A- 62 099 217
- JP-A- 2005 000 092
- US-B1- 6 305 486
- US-B1- 6 305 486

## Description

### Field of the Invention

The present invention relates to an implement carrier, such as a ride-on lawnmower, which has a front and a rear wheel pair, of which at least one is driven by a hydraulic motor, which is included in a closed hydraulic line system, which also comprises a hydraulic pump which is adapted to drive the hydraulic motor and which is driven by an internal combustion engine.

### Background Art

Prior-art implement carriers, in particular prior-art ride-on lawnmowers, of this type have an actuating means, usually in the form of a foot pedal, which is movable between an inactive position, in which, for reasons of safety, it prevents start of the internal combustion engine, and an active position, in which it allows start of the internal combustion engine.

Prior-art implement carriers of this type usually also have a bypass valve, which is arranged in the closed hydraulic line system and which is settable between a bypass position, in which movement of the implement carrier is possible when the internal combustion engine is shut off, and a normal position, in which such movement is practically impossible. If the user forgets to reset the bypass valve to its normal position and it thus is in its bypass position when the implement carrier is being run, the hydraulic pump forces oil under high pressure into the housing of the hydraulic motor, in which case the axle seals of the wheel pair driven by the hydraulic motor can be damaged due to the high oil pressure and oil may leak out via these seals. US6305486B1 discloses an implement carrier according to the preamble of claim 1.

### Summary of the Invention

The object of the present invention is to provide an implement carrier, in which this drawback is eliminated.

This object is achieved by an implement carrier as defined by the features of claim 1, which is of the type stated by way of introduction and further comprises an actuating means which is movable between an inactive position, in which it prevents start of the internal combustion engine, and an active position, in which it allows start of the internal combustion engine, a bypass valve, which is arranged in the hydraulic line system, being settable between a bypass position, in which movement of the implement carrier is possible when the internal combustion engine is shut off, and a normal position, in which such movement is practically impossible, said implement carrier according to the invention being characterised in that the actuating means is connected to the bypass valve in such a manner that the actuating means when moving from the inactive position to the active position, if the bypass valve is in its bypass position, moves the bypass valve to its normal position.

The actuating means preferably consists of a foot pedal.

### Brief Description of the Drawings

The invention will now be described in more detail with reference to the accompanying drawings.
Fig. 1 is a schematic top plan view of an implement carrier according to the invention.
Fig. 2 is a skeleton diagram and shows a hydraulic line system supported by the chassis of the implement carrier.
Figs 3 and 4 illustrate schematically a hydraulic motor, shown in Fig. 2, with a bypass valve in a normal position and a bypass position respectively.
Fig. 5 is a perspective view of a foot pedal and its mechanical connection to the bypass valve.

### Description of a Preferred Embodiment

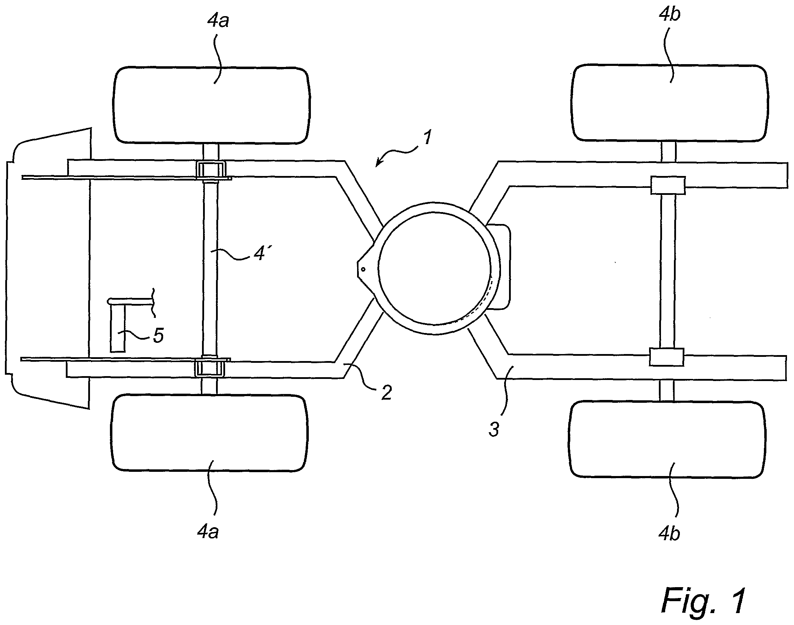

The implement carrier 1, which is schematically shown in Fig. 1 and of which essentially only the chassis and two wheel pairs are illustrated, is a ride-on lawnmower. The ride-on lawnmower is articulated, and its chassis comprises a front frame 2 and a rear frame 3, which are connected to each other and pivotable about a vertical pivot axis. The front frame 2 supports the two front wheels 4a of the ride-on lawnmower and a lawn-mowing unit (not shown). The rear frame 3 supports the two rear wheels 4b of the ride-on lawnmower.

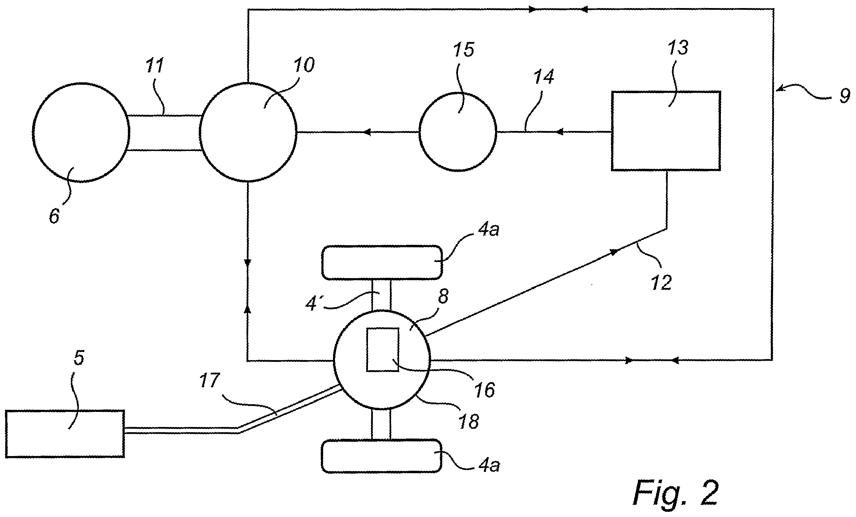

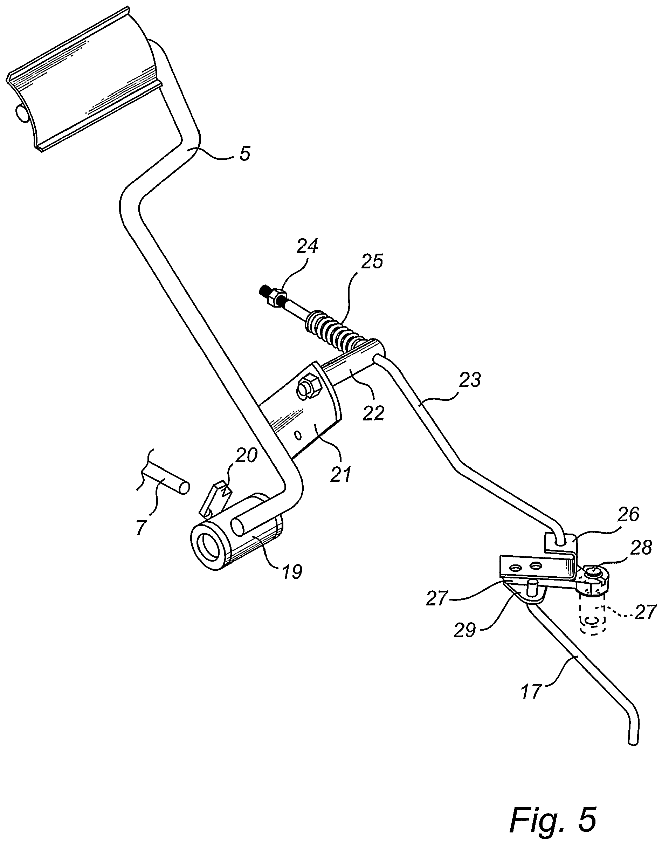

The ride-on lawnmower has a foot pedal 5, which is a combined clutch and brake pedal. The foot pedal 5 is spring-biased towards an inactive upper position, which is shown in Figs 1 and 5 and in which it prevents the internal combustion engine 6 (Fig. 2) of the ride-on lawnmower from being started. The foot pedal 5 is depressable to a position which is active with respect to the clutch and brake functions but also with respect to the possibility of starting the internal combustion engine 6 and in which it allows start of the internal combustion engine. In its active position, the foot pedal 5 holds an electric disconnecting switch 7 (Fig. 5) in a depressed position, in a manner that will be described in more detail below, in which the disconnecting switch closes an electric circuit, thus allowing the internal combustion engine 6 to be started.

The axle 4' of the front wheels 4a is driven by a hydraulic motor 8, which is included in a closed hydraulic line system 9, which is shown schematically in Fig. 2. The hydraulic line system 9 also comprises a hydraulic pump 10, which is driven by the internal combustion engine 6 via a drive belt 11 and which in turn drives the hydraulic motor 8.

A normal, minor hydraulic oil leakage from the hydraulic motor 8 is drained through a drain line 12 to a tank 13, from which hydraulic oil is supplied to the hydraulic pump 10 through a line 14 by means of a feed pump 15.

If the ride-on lawnmower, when the internal combustion 6 is shut off, is to be moved for some reason, so much propulsive or tractive power is required to make the wheels 4a and 4b roll that it is practically impossible to perform such movement. The reason why so much power is required is that the pressure of the hydraulic oil must be overcome for the oil to be forced "backwards" in the system.

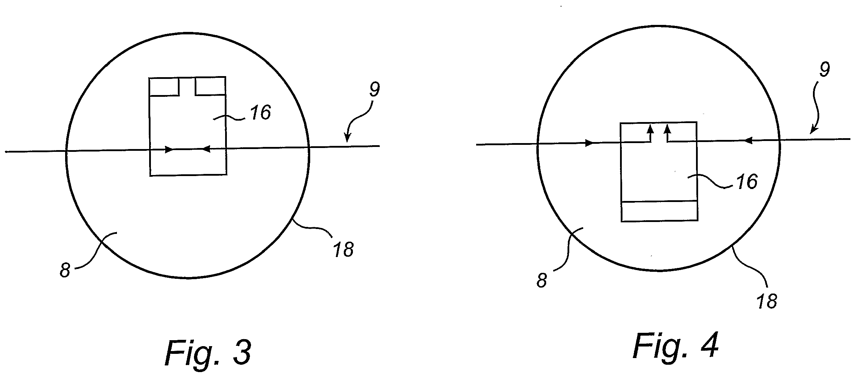

A bypass valve 16 is arranged in the hydraulic motor 8 to allow such movement. The bypass valve 16 is manually settable by means of a lever 17 between a normal position, which is shown in Fig. 3, and a bypass position, which is shown in Fig. 4 and in which the closed hydraulic line system 9 is open towards the interior of the hydraulic motor housing 18, thus allowing movement of the ride-on lawnmower when the internal combustion engine 6 is shut off.

The foot pedal 5 is pivotable about a horizontal axis which is defined by the centre axis of a circular sleeve 19, to which the foot pedal 5 is attached (Fig. 5). The sleeve 19 has a lug 20 attached to it and adapted to cooperate with the disconnecting switch 7. The foot pedal 5 has a flange 21 which is attached to it and rotatably supports a horizontal pin 22. An actuating arm 23 extends perpendicular through the pin 22 and is connected thereto. The actuating arm 23 has a back nut 24 at one end and supports a pressure spring 25 between the back nut 24 and the pin 22. The actuating arm 23 is at its other end connected by a first connecting element 26 to a horizontal setting arm 27, which is non-rotatably connected to a pivot pin 28 which is rotatable to set the bypass valve 16. When the arm 27 is in the front pivot position, indicated by solid lines in Fig. 5, the bypass valve 16 is in its normal position (Fig. 3). When the arm 27 is in the rear pivot position, indicated by dashed lines in Fig. 5, the bypass valve 16 is in its bypass position (Fig. 4). The lever 17 is also connected, by a second connecting element 29, to the horizontal setting arm 27 and thus, via the setting arm and the first connecting element 26, also connected to the actuating arm 23 and, via the actuating arm, finally connected to the foot pedal 5.

When the setting arm 27 is to be moved from the front pivot position to the rear pivot position, that is when the bypass valve 16 is to be set in its bypass position, the lever 17 is pulled backwards. Now the actuating arm 23 is carried to a position, in which the back nut 24 abuts against the spring 25, however, without tightening it.

If the foot pedal is depressed from its inactive position shown in Fig. 5 to its active position, in which the lug 20 in cooperation with the disconnecting switch 7 allows start of the internal combustion engine 6, the foot pedal moves, by means of the actuating arm 23, the setting arm 27 back to its front pivot position, if, for instance out of forgetfulness, it has not previously been returned by pushing the lever 17 forwards. When the internal combustion engine 6 is started, the bypass valve 16 is therefore always in its normal position.

The implement carrier can be modified in various ways within the scope of the invention as defined in claim 1. Thus, especially the actuating means designed in the shape of a foot pedal 5, which is movable between an inactive position and an active position, in which start of the internal combustion 6 is prevented and allowed, respectively, can be designed in an arbitrary manner, for instance have the shape of an adjustable lever, if only the actuating means is connected to the bypass valve 16 in such a manner that the bypass valve safely is in its normal position when the internal combustion engine 6 is started.

## Claims

1. An implement carrier, such as a ride-on lawnmower, which has a front and a rear wheel pair (4a, 4b), of which at least one (4a) is driven by a hydraulic motor (8), which is included in a closed hydraulic line system (9), which also comprises a hydraulic pump (10) which is adapted to drive the hydraulic motor and which is driven by an internal combustion engine (6), said implement carrier further having an actuating means (5), which is movable between an inactive position, in which it prevents start of the internal combustion engine (6), and an active position, in which it allows start of the internal combustion engine, a bypass valve (16), which is arranged in the hydraulic line system (9), being settable between a bypass position, in which movement of the implement carrier is possible when the internal combustion engine is shut off, and a normal position, in which such movement is practically impossible, **characterised in that** the actuating means (5) is connected to the bypass valve (16) in such a manner that the actuating means when moving from the inactive position to the active position, if the bypass valve is in its bypass position, moves the bypass valve to its normal position.

2. An implement carrier as claimed in claim 1, in which the actuating means consists of a foot pedal (5).

## Patentansprüche

1. Geräteträger, beispielsweise ein Aufsitzrasenmäher, der ein vorderes und ein hinteres Räderpaar (4a, 4b) aufweist, von denen mindestens eines (4a) von einem Hydraulikmotor (8) angetrieben wird, der in einem geschlossenen Hydraulikleitungsystem (9) enthalten ist, das auch eine Hydraulikpumpe (10) aufweist, die zum Antreiben des Hydraulikmotors ausgebildet ist und von einer Brennkraftmaschine (6) angetrieben wird, wobei der Geräteträger ferner eine Betätigungseinrichtung (5) aufweist, die zwischen einer inaktiven Position, in der sie den Start der Brennkraftmaschine (6) verhindert, und einer aktiven Position, in der sie den Start der Brennkraftmaschine zulässt, bewegbar ist, wobei ein Umgehungsventil (16), das in dem Hydraulikleitungsystem (9) angeordnet ist, zwischen einer Umgehungsposition, in der eine Bewegung des Geräteträgers bei ausgeschalteter Brennkraftmaschine möglich ist, und einer normalen Position, in der eine solche Bewegung praktisch unmöglich ist, verstellbar ist,
**dadurch gekennzeichnet, dass** die Betätigungseinrichtung (5) mit dem Umgehungsventil (16) derart verbunden ist, dass die Betätigungseinrichtung bei ihrer Bewegung von der inaktiven Position in die aktive Position dann, wenn sich das Umgehungsventil in seiner Umgehungsposition befindet, das Umgehungsventil in seine normale Position bewegt.

2. Geräteträger nach Anspruch 1,
bei dem die Betätigungseinrichtung aus einem Fußpedal (5) besteht.

## Revendications

1. Support d'outil, tel qu'une tondeuse auto-portée, lequel présente une paire de roues avant et arrière (4a, 4b), dont au moins une (4a) est entrainée par un moteur hydraulique (8), qui est inclus dans un système de ligne hydraulique fermée (9), qui comprend également une pompe hydraulique (10) qui est adaptée pour entraîner le moteur hydraulique et qui est entraînée par un moteur à combustion interne (6), ledit support d'outil ayant de plus un moyen d'actionnement (5), qui est déplaçable entre une position inactive, dans laquelle il évite le démarrage du moteur à combustion interne (6), et une position active, dans laquelle il permet le démarrage du moteur à combustion interne, une soupape de dérivation (16), qui est disposée dans le système de ligne hydraulique (9), étant réglable entre une position de dérivation, dans laquelle un mouvement du support d'outil est possible lorsque le moteur à combustion interne est arrêté, et une position normale, dans laquelle un tel mouvement est pratiquement impossible, **caractérisé en ce que** le moyen d'actionnement (5) est connecté à la vanne de dérivation (16) de telle manière que le moyen d'actionnement lors du déplacement de la position inactive à la position active, si la vanne de dérivation se trouve dans sa position de dérivation, déplace la vanne de dérivation dans sa position normale.

2. Support d'outil selon la revendication 1, dans lequel le moyen d'actionnement est constitué d'une pédale à pied (5).
